# EUROPEAN PATENT SPECIFICATION

(11) **EP 2 412 731 B1**
(45) Date of publication and mention of the grant of the patent: **28.08.2013**
(21) Application number: 11175460.2
(22) Date of filing: 26.07.2011
(51) Int. Cl.: C08C 19/20, C08C 19/22, C08C 19/25, C08C 19/44, C08L 9/06, C08L 15/00, B60C 1/00, C08L 19/00

(54) **Rubber composition, methof of manufacturing such a rubber composition and tire comprising such a rubber composition**
Gummizusammensetzung, Verfahren zur Herstellung einer derartigen Gummizusammensetzung und Reifen mit einer derartigen Gummizusammensetzung
Composition de caoutchouc, procédé de fabrication correspondant et pneu utilisant cette composition de caoutchouc

(30) Priority: 28.07.2010 US 368368 P; 23.05.2011 US 201113113214; 31.05.2011 US 201113118642
(43) Date of publication of application: 01.02.2012
(73) Proprietor: The Goodyear Tire & Rubber Company, Akron, OH 44316-0001 (US)
(72) Inventor: Francik, William Paul, Bath, OH Ohio 44333 (US); Verthe, John Joseph Andre, Kent, OH Ohio 44240 (US); Zhao, Junling, Hudson, OH Ohio 44236 (US); Balogh, George Frank, North Canton, OH Ohio 44720 (US); Alwardt, Christin Louise, Akron, OH Ohio 44312 (US)
(74) Representative: Kutsch, Bernd

(56) References cited:
- EP-A1- 1 398 347
- EP-A1- 1 559 586
- EP-A1- 1 640 183
- US-A1- 2008 027 162
- DATABASE WPI Week 200336 Thomson Scientific, London, GB; AN 2003-381607 XP002660553, & WO 03/029299 A1 (JSR CORP) 10 April 2003 (2003-04-10)

## Description

### Field of the Invention

The invention relates to a rubber composition, its method of manufacture, and to a pneumatic rubber tire with a component comprising a silica reinforced rubber composition comprising a specialized polybutadiene rubber, a functionalized styrene/butadiene elastomer and a cis 1,4-polyisoprene rubber.

### Background of the Invention

Pneumatic rubber tires are often desired to have treads of a rubber composition which will provide properties which include good traction on the road, resistance to tread wear and low rolling resistance. It has traditionally been difficult to improve one of such properties without sacrificing one or more of the other properties. Such properties depend, to a great extent, upon dynamic viscoelastic properties of elastomers used in making the tread rubber composition as well as viscoelastic properties of the rubber composition itself.

For example, elastomers, or rubber composition, presenting a higher rebound property can generally promote lower rolling resistance for a tire with a tread containing such elastomer(s) or rubber composition. For example, elastomers, or rubber composition, presenting a higher resistance to abrasion might generally promote greater resistance to tread wear for a tire tread containing such elastomer(s) or rubber composition. For example, elastomers, or rubber composition, having a higher glass transition temperature (Tg) may promote greater traction, or skid resistance, for as tire tread containing such elastomer(s) or rubber composition.

A challenge is presented to balance these three viscoelastic properties, which can be largely inconsistence properties in a sense that improving one of such properties may sacrifice one or more of the other two properties. The challenge is to evaluate specified combination of elastomers sometimes used in tire treads to achieve a beneficial balance of properties.

Traction emphasizing tread rubber typically exhibits a relatively high, single, glass transition temperature (Tg) of above -50°C and usually within a range of from zero to -50°C.

For this evaluation, a rubber composition is evaluated which comprises a silica-rich filler reinforcement containing rubber composition comprising a combination of elastomers of cooperative viscoelastic properties comprising a specialized polybutadiene rubber, functionalized styrene/butadiene rubber and cis 1,4-polyisoprene rubber.

In the description of this invention, terms such as "compounded rubber", "rubber compound" and "compound", if used herein, refer to rubber compositions composed of one or more elastomers blended with various ingredients, including curatives such as sulfur and cure accelerators. The terms "elastomer" and "rubber" might be used herein interchangeably. It is believed that all of such terms are well known to those having skill in such art.

A reference to glass transition temperature, or Tg, of an elastomer or elastomer composition, where referred to herein, represents an inflection point glass transition temperature(s) of the respective elastomer or elastomer composition in its uncured state or possibly a cured state in a case of an elastomer composition. A Tg can be suitably determined by a dynamic mechanical analyzer (DMA), an RSA III instrument from TA Instruments, as well as, for example, a differential scanning calorimeter (DSC), at a temperature rate of increase of 10°C per minute.

A resin's softening point (Sp) may be determined by ASTM D-28.

For this invention, the term "functionalized" relates to elastomers which contain at least one functional group which is reactive with hydroxyl groups (e.g. silanol groups) contained on silica reinforcement, preferably precipitated silica reinforcement, for the rubber composition.

### Disclosure and Practice of the Invention

The invention relates to a rubber composition in accordance with claim 1, a method of manufacturing in accordance with claim 10, and a tire in accordance with claim 14.

Dependent claims refer to preferred embodiments of the invention.

In accordance with a preferred aspect of this invention, a rubber composition is provided comprising, based upon parts by weight per 100 parts by weight of rubber (phr):
(A) an elastomer comprising:
   (1) from 50 to 80 phr of a solution polymerization prepared styrene/butadiene rubber functionalized with an alkoxysilane group or an alkoxysilyl group) and at least one functional group comprising amine or thiol units and having a Tg in a range of from -40 to -10°C;
   (2) from 10 to 40 phr of a cis 1,4-polybutadiene rubber; i.e. cis 1,4 polybutadiene rubber,
   (3) 5 to 40 phr of a cis 1,4-polyisoprene rubber, preferably natural cis 1,4-polyisoprene rubber, having a Tg in a range of -65 to -70°C;
(B) 5 to 20 phr of paraffinic/naphthenic rubber processing oil preferably containing from 30 to 40 weight percent naphthenic oil and from 45 to 55 weight percent paraffinic oil and having a Tg in a range of from -40 to -60°C;
(C) 40 to 110, alternatively 50 to 80, phr of a reinforcing filler comprising:
   (1) silica filler, preferably amorphous rubber reinforcing precipitated silica filler (precipitated silica), or
   (2) a combination of silica, preferably precipitated silica, and rubber reinforcing carbon black where the filler contains from 55 to 75 weight percent of rubber reinforcing carbon black, or
   (3) a combination of the silica, preferably precipitated silica and rubber reinforcing carbon black where the filler contains up to 25 weight percent of the rubber reinforcing carbon black, or
   (4) a combination of silica, preferably precipitated silica, and rubber reinforcing carbon black where the filler contains from 15 to 50 weight percent of the rubber reinforcing carbon black;
(D) optionally from 2 to 15 phr of styrene/alphamethylstyrene resin;
(E) a coupling agent having a moiety (e.g. a siloxy moiety) reactive with hydroxyl groups (e.g.: silanol groups) contained on the surface of the silica and another moiety interactive with at least one of the conjugated diene-based elastomers, wherein the coupling agent comprises a bis-(3-ethoxysilylpropyl) polysulfide material having an average of from 3 to 4, or 2 to 4 connecting sulfur atoms in the polysulfide bridge;
   wherein the cis 1,4-polybutadiene rubber has a microstructure comprising 96 to 98 percent cis 1,4-isomeric units, 1 to 3 percent trans 1,4-isomeric units and 0.3 to 1 percent vinyl 1,2-content; a number average molecular weight (Mn) in a range of from 230,000 to 250,000 with a heterogeneity index (Mw/Mn) in a range of from 1.5/1 to 2/1, and a Tg in a range of from -104 to -109°C;
   wherein said functionalized SBR preferably has a bound styrene content in a range of from 10 to 50 percent, alternately in a range of from 10 up to 30 percent;
   wherein said styrene/butadiene rubber (SBR) is functionalized with an alkoxysilane group and at least one of amine group or thiol group, and
   wherein said styrene/alphamethylstyrene copolymer resin has a softening point (Sp) preferably in a range of from 80 to 90°C with a styrene content in a range of from 10 to 30 percent.

Where the styrene/alpha-methylstyrene resin is to be included in the rubber composition, a combination of the polybutadiene rubber may be used in amount ranging from 15 to 25 phr, the natural rubber in an amount ranging from 5 to 10 phr and the processing oil in amount ranging from 5 to 10 phr, if desired.

In further accordance with this invention, a pneumatic rubber tire is provided having a component comprising such a rubber composition.

In practice, the coupling agent may comprise a bis-(3-ethoxysilylpropyl) polysulfide compound having an average of from 2 to 4, desirably from 3.6 to 4, alternately from 2 to 2.6, connecting sulfur atoms in the polysulfide bridge.

Where the styrene/alpha-methylstyrene resin is to be included in the rubber composition, a combination of said specialized polybutadiene rubber may be used in amount ranging from 15 to 25 phr, the natural rubber in an amount ranging from 5 to 10 phr and the processing oil in an amount ranging from 5 to 10 phr, if desired.

It is to be appreciated that the specialized polybutadiene rubber is significantly different from a common polybutadiene rubber having a microstructure comprising 96 to 99 percent cis 1,4-isomeric units, 0.1 to 1 percent trans 1,4-isomeric units and 1 to 3 percent vinyl 1,2-content; a much lower number average molecular weight (Mn) in a range of from 75,000 to 150,000 with a much higher heterogeneity index (Mw/Mn) in a range of from 3/1 to 5/1 produced with a nickel catalyst.

In particular, the specialized polybutadiene rubber for evaluation for use in this invention is likely be beneficially tougher because of its significantly higher weight average molecular weight.

For the functionalized styrene/butadiene rubber: In one embodiment, the styrene-butadiene rubber may be obtained by copolymerizing styrene and 1,3-butadiene characterized by having an amino group or thiol group and an alkoxysilyl group bonded to the polymer chain. In one embodiment, the alkoxysilyl group may comprise at least one of methoxysilyl group and ethoxysilyl group.

The amino group or thiol group may be bonded to any of a polymerization initiating terminal, a polymerization terminating terminal, a main chain of the styrene/butadiene rubber and as a side chain of the styrene/butadiene rubber, as long as the group is bonded to the styrene-butadiene rubber chain. However, the amino group or thiol group is preferably introduced to the polymerization initiating terminal or the polymerization terminating terminal, in that the disappearance of energy at a polymer terminal is inhibited to improve hysteresis loss characteristics of the rubber.

Further, the content of the alkoxysilyl group bonded to the polymer chain for the functionalized styrene/butadiene rubber is desirably from 0.5 to 200, alternately from 2 to 50, mmol/kg of the styrene/butadiene rubber.

The alkoxysilyl group may be bonded to any of the polymerization initiating terminal, the polymerization terminating terminal, the main chain of the styrene/butadiene rubber and the side chain to the styrene/butadiene rubber, as long as it is bonded to the styrene/butadiene rubber's polymer chain. However, the alkoxysilyl group is preferably introduced to the polymerization initiating terminal or the polymerization terminating terminal, in that the disappearance of energy is inhibited from the styrene/butadiene rubber terminal to be able to improve hysteresis loss characteristics of the rubber.

The functionalized styrene/butadiene rubber can be produced, for example, by polymerizing styrene and butadiene in a hydrocarbon solvent by anionic polymerization using an organic alkali metal and/or an organic alkali earth metal as an initiator, adding a terminating agent compound having a primary amino group protected with a protective group and/or a thiol group protected with a protecting group and an alkoxysilyl group to react it with a living polymer chain terminal at the time when the polymerization has substantially completed, and then conducting deblocking of the protective group, for example, by hydrolysis or other appropriate procedure. In one embodiment, the styrene-butadiene rubber can be produced as disclosed in US-A- 7,342,070. In another embodiment, the styrene-butadiene rubber can be produced as disclosed in WO-A- 2007/047943.

In one embodiment, and as taught in US-A- 7,342,070, the functionalized styrene-butadiene rubber may be of the formula (I) or (II) 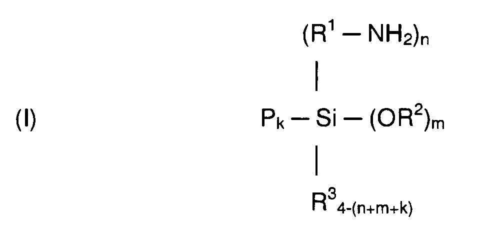 wherein P is a styrene/butadiene copolymer chain, R¹ is an alkylene group having 1 to 12 carbon atoms, R² and R³ are each independently an alkyl group having 1 to 20 carbon atoms, an allyl group or an aryl group, n is an integer of 1 or 2, m is an
integer of 1 or 2, and k is an integer of 1 or 2, with the proviso that n+m+k is an integer of 3 or 4, 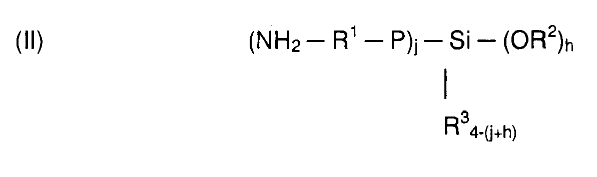 wherein P, R¹, R² and R³ have the same definitions as give for the above-mentioned formula I, j is an integer of 1 to 3, and h is an integer of 1 to 3, with the provision that j+h is an integer of 2 to 4.

The terminating agent compound having a protected primary amino group and an alkoxysilyl group may be any of various compounds as are known in the art. In one embodiment, the compound having a protected primary amino group and an alkoxysilyl group may include, for example, N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)-aminoethyltriethoxysilne, N,N-bis(trimethylsilyl)aminoethylmethyldimethoxysilane, N,N-bis(trimethylsilyl)aminoethylmethyldiethoxysilane, etc., and preferred are 1-trimethylsilyl-2,2-dimethoxy-1-aza-2-silacyclopentane, N,N-bis(trimethylsilyl) aminopropylmethyldimethoxysilane and N,N-bis(trimethylsilyl)aminopropylmethyldiethoxysilane. In one embodiment, the compound having a protected primary amino group and an alkoxysilyl group is N,N-bis(trimethylsilyl)aminopropyltriethoxysilane.

In one embodiment, the compound having a protected primary amino group and an alkoxysilyl group may be any compound of formula III

(III) RN-(CH₂)ₓSi(OR')₃

wherein R in combination with the nitrogen (N) atom is a protected amine group which upon appropriate post-treatment yields a primary amine, R' represents a group having 1 to 18 carbon atoms selected from an alkyl, a cycloalkyl, an allyl, or an aryl; and x is an integer from 1 to 20. In one embodiment, at least one R' group is an ethyl radical. By appropriate post-treatment to yield a primary amine, it is meant that subsequent to reaction of the living polymer with the compound having a protected primary amino group and an alkoxysilyl group, the protecting groups are removed. For example, in the case of bis(trialkylsilyl) protecting group as in N,N-bis(trimethylsilyl)aminopropyltriethoxysilane, hydrolysis is used to remove the trialkylsilyl groups and leave the primary amine.

Styrene/butadiene rubbers functionalized with an alkoxysilane group and a primary amine group may be, for example, as HPR 355™ from Japan Synthetic Rubber (JSR).

In one embodiment, the solution polymerized styrene-butadiene rubber is as disclosed in WO-A 2007/047943 and is functionalized with an alkoxysilane group and a thiol, and comprises the reaction product of a living anionic polymer, which may include a silane-sulfide modifier, represented by the formula IV

(IV) (R⁴O)ₓR⁴_{y}Si-R⁵-S-SiR⁴₃

wherein Si is silicon; S is sulfur; O is oxygen; x is an integer selected from 1, 2 and 3;y is an integer selected from 0, 1, and 2; x+y=3; R⁴ is the same or different and is (C₁-C₁₆) alkyl; and R' is aryl, and alkyl aryl, or (C₁-C₁₆) alkyl. In one embodiment, R⁵ is a (C₁-C₁₆) alkyl. In one embodiment, each R⁴ group is the same or different, and each is independently a C₁-C₅ alkyl, and R⁵ is C₁-C₅ alkyl.

Suitable styrene/butadiene rubbers functionalized with an alkoxysilane group and a thiol group may be, for example, SLR SE4602™ (formerly Dow Olefinverbund GmbH) which understood to be of the type of silane/thiol functionalized SBR described in WO-A- 2007/047943.

In practice, it is envisioned that the specialized polybutadiene elastomer may be prepared, for example, by polymerization of 1,3-polybutadiene monomer in an organic solvent solution in the presence of a catalyst system comprising neodymium compound, an aluminum alkyl and an aluminum chloride delivering compound, and by treating the reaction mixture with, for example, a sulfur chloride such as, for example, disulfur dichloride as mentioned in US-A- 5,567,784, so long as it possesses the aforesaid microstructure, molecular weight and heterogeneity index. Representative of neodymium compounds might be, for example, neodymium neodecanoate, neodymium octanoate or neodymium versalate. The neodymium compounds might be derived from a neodymium carboxylate soap such as, for example Nd(R-C00)₃. Representative of aluminum alkyl compounds may be, for example, triisobutylaluminum (TIBA) and diisobutylaluminum hydride (DIBAH). Representative of aluminum chloride delivering compounds may be, for example, diethylaluminum chloride, all so long as the specialized polybutadiene elastomer possesses the aforesaid microstructure, molecular weight and heterogeneity index and Tg ranges.

For this evaluation, a purpose of inclusion of the specialized polybutadiene with its relatively high number average molecular weight, relative low homogeneity index and somewhat low Tg is to promote higher rebound values for the rubber composition which is predictive of less internal heat generation, and therefore less temperature build-up for the rubber composition when it is being worked and predictive of better (lower) rolling resistance for a tire with a tread of such rubber composition which contains the specialized polybutadiene rubber. A further purpose is to promote greater abrasion resistance of the rubber composition which is predictive of better resistance to treadwear for a tire with such rubber composition which contains the specialized polybutadiene rubber.

For this evaluation, a purpose of inclusion of the functionalized styrene/butadiene rubber is also to promote higher rebound values for the rubber composition which is predictive of less internal heat generation, and therefore less temperature build-up for the rubber composition when it is being worked and predictive of better (lower) rolling resistance for a tire with a tread of such rubber composition which contains the specialized polybutadiene rubber. A further purpose is to promote greater abrasion resistance of the rubber composition which is predictive of better resistance to treadwear for a tire with such rubber composition which contains the specialized polybutadiene rubber.

For this evaluation, a purpose of inclusion of the cis 1,4-polyisoprene rubber in the rubber composition containing the specialized polybutadiene rubber and functionalized butadiene/styrene rubber is to drive the rubber composition's Tg in a direction of a higher Tg to promote improved wet traction for a tire tread of such rubber composition which contains the cis 1,4-polyisoprene rubber, particularly natural rubber.

For this evaluation, a purpose of inclusion of the paraffinic/naphthenic rubber processing oil, which contains a significant amount of from 30 to 40 weight naphthenic oil and from 45 to 55 weight percent paraffinic oil, with the remainder being aromatics, having a significantly high Tg in a range of from -40 to -60°C, as compared to use of a rubber processing oil such as a paraffinic/naphthenic oil which has a higher naphthenic oil content and a significantly lower Tg in a range of from - 70 to -90°C, is to aid in driving the Tg of the rubber composition in a direction of a higher Tg to promote improved wet traction for a tire tread of such rubber composition which contains the indicated rubber processing oil with the associated relatively high Tg.

For this evaluation, a purpose of inclusion of the silica coupling agent comprising a bis(3-ethoxysilylpropyl) polysulfide having an average of from 3.6 to 4 connecting sulfur atoms in its polysulfidic bridge instead of a silica coupling agent comprising a bis(3-ethoxysilylpropyl) polysulfide having a reduced average of from 2.1 to 2.6 connecting sulfur atoms in its polysulfidic bridge is to increase the effective number of polymer/filler bonds, particularly to increase the rubber/reinforcing filler interaction, and, further, to increase the sulfur content (increase the sulfur level in the rubber composition) by the break-down, and thereby sulfur contribution derived from, the sulfur-containing coupling agent with its significantly higher sulfur content, to promote a tighter cure for the resultant cured rubber composition and to thereby promote higher rebound values for the rubber composition which is predictive of less internal heat generation, and therefore less temperature build-up for the rubber composition when it is being worked and predictive of better (lower) rolling resistance for a tire with a tread of such rubber composition which contains the silica coupling agent with the higher sulfur content. A further purpose is to promote greater abrasion resistance of the rubber composition which is predictive of better resistance to treadwear for a tire with such rubber composition which contains the silica coupling agent with the higher sulfur content.

It is contemplated that the functionalized styrene-butadiene rubber (functionalized SBR) may be prepared, for example, by polymerizing styrene and 1,3-butadiene monomers in a hydrocarbon solvent by anionic polymerization using an organic alkali metal and/or an organic alkali earth metal as an initiator, adding a terminating agent compound having a primary amino group protected with a protective group and/or a thiol group protected with a protecting group and an alkoxysilyl group to react it with a living polymer chain terminal at the time when the polymerization has substantially completed, and then conducting a deblocking, for example, by hydrolysis or other appropriate procedure. In one embodiment, the styrene-butadiene rubber may be prepared, for example, as disclosed in US-A-7,342,070 which is hereby referenced herewith in its entirety. In another embodiment, the styrene-butadiene rubber may be prepared, for example, as disclosed in WO-A- 2007/047943.

In practice, a relatively high glass transition temperature (Tg) functionalized SBR with a Tg in a range of from -10°C to -35°C, if the SBR is used, is considered herein to be important to promote tire tread traction, hysteresis, or coefficient of friction, for the rubber composition. It is usually desired herein that the bound styrene content be at least 23 percent, alternatively in a range of from 10 to 30 percent, based upon the SBR with a vinyl content in a range of from 35 to 45 percent based upon the SBR and contained in its polybutadiene portion, to promote tire tread traction enhancement.

In the practice of this invention, inclusion of the specialized polybutadiene rubber in the rubber composition is provided to evaluate its effect in promoting resistance to abrasion.

The inclusion of the natural cis 1,4-polyisoprene rubber is considered herein to be important in order to drive an increase in the Tg or the rubber composition.

In practice, it is preferred that the elastomers utilized in the rubber composition are exclusive of polymers and copolymers of isobutylene, including halogen modifications thereof.

Examples of reinforcing carbon blacks for elastomers, generally, together with their Iodine number values and DBP (dibutyl phthalate) absorption values, may be found in The Vanderbilt Rubber Handbook, (1990), 13th edition, Pages 416 through 419.

In the practice of this invention, use of the combinations of the aforesaid silica and rubber reinforcing carbon black reinforcing fillers in the rubber composition is provided to promote better rolling resistance (less rolling resistance) and improved wet traction for a tire with a tread of such rubber composition which contains such combination of silica and rubber reinforcing carbon black..

The precipitated silicas such as, for example, those obtained by the acidification of a soluble silicate (e.g., sodium silicate or a co-precipitation of a silicate and an aluminate).

The BET surface area of the silica, as measured using nitrogen gas, may, for example, be in a range of 50 to 300, alternatively 120 to 200, square meters per gram.

The silica may also have a dibutylphthalate (DBP) absorption value in a range of, for example, 100 to 400, and usually 150 to 300 cc/g.

Various commercially available silicas may be considered for use in this invention such as silicas commercially available from PPG Industries under the Hi-Sil trademark with designations 210 and 243, silicas available from Rhodia, with designations of Zeosil 1165MP and Zeosil 165GR and silicas available from Degussa AG with designations VN2, VN3, 3770GR, and from Huber as Zeopol 8745.

When silica reinforcement is used for a rubber tire tread, the silica is conventionally used with a coupling agent to aid in coupling the precipitated silica to the diene-based elastomers.

Compounds capable of reacting with both the silica surface and the rubber elastomer molecule in a manner to cause the silica to have a reinforcing effect on the rubber, many of which are generally known to those skilled in such art as coupling agents, or couplers, are often used. Such coupling agents, for example, may be premixed, or pre-reacted, with the silica particles or added to the rubber mix during the rubber/silica processing, or mixing, stage. If the coupling agent and silica are added separately to the rubber mix during the rubber/silica mixing, or processing stage, it is considered that the coupling agent then combines in situ with the silica.

In particular, such coupling agents may, for example, be composed of a silane which has a constituent component, or moiety, (the silane portion) capable of reacting with the silica surface and, also, a constituent component, or moiety, capable of reacting with the rubber, particularly a sulfur vulcanizable rubber which contains carbon-to-carbon double bonds, or unsaturation. In this manner, then the coupler acts as a connecting bridge between the silica and the rubber and thereby enhances the rubber reinforcement aspect of the silica.

In one aspect, the silane of the coupling agent apparently forms a bond to the silica surface, possibly through hydrolysis, and the rubber reactive component of the coupling agent combines with the rubber itself.

Numerous coupling agents are taught for use in combining silica and rubber such as, for example, and as hereinbefore mentioned, silane coupling agents containing a polysulfide component, or structure, such as bis-(3-alkoxysilylalkl) polysulfide which contains an average from 2 to 4 (such as for example a range of from 2 to 2.6 or a range of from 3.6 to 4) connecting sulfur atoms in its polysulfidic bridge such as, for example, a bis-(3-triethoxysilylpropyl) polysulfide.

However, for this invention, a coupling agent comprises a bis-(3-ethoxysilylpropyl) polysulfide material having an average of from 3.6 to 4 connecting sulfur atoms in the polysulfide bridge to promote a resultant higher cross-link density for the rubber composition.

It is readily understood by those having skill in the art that the rubber compositions of the tread would be compounded with conventional compounding ingredients including the aforesaid reinforcing fillers such as carbon black and precipitated silica, as hereinbefore defined, in combination with a silica coupling agent, as well as antidegradant(s), processing oil as hereinbefore defined, stearic acid or a zinc stearate, zinc oxide, sulfur-contributing material(s) and vulcanization accelerator(s) as hereinbefore defined.

Antidegradants are typically of the amine or phenolic type. While stearic acid is typically referred to as a rubber compounding ingredient, it may be pointed out that the ingredient itself is usually obtained and used as a mixture of organic acids primarily composed of stearic acid with at least one of oleic acid, linolenic acid and/or palmitic acid normally contained in the stearic acid as typically used. The mixture may contain minor amounts (less than about six weight percent) of myristic acid, arachidic acid and/or arachidonic acid. Such material or mixture is conventionally referred to in the rubber compounding art as stearic acid.

Where normal or typical rubber compounding amounts or ranges of amounts of such additives are used, they are not otherwise considered as a part of the invention. For example, some of the ingredients might be classified, in one aspect, as processing aids. Such processing aids may be, for example, waxes such as microcrystalline and paraffinic waxes typically used in a range of 1 to 5 phr and often in a range of 1 to 3 phr; and resins, usually as tackifiers, such as, for example, synthetic hydrocarbon and natural resins typically used in a range of 1 to 5 phr and often in a range of 1 to 3 phr. A curative might be classified as a combination of sulfur and sulfur cure accelerator(s) for the rubber compound (usually simply referred to as accelerator) or a sulfur donor/accelerator. In a sulfur and accelerator(s) curative, the amount of free sulfur added to the rubber composition, in addition to the sulfur generating bis(3-triethoxysilylpropyl) polysulfide coupling agent, is in a range of 1 to 5 phr and more generally in a range of 2 to 4 phr in order to promote cross-link density of the cured rubber composition; and the accelerator(s), often of the sulfenamide type, may be used, for example, in a range of 0.5 to 5 phr and perhaps in a range of 1 to 2 phr. The ingredients, including the elastomers but exclusive of sulfur and accelerator curatives, are normally first mixed together in at least one and often in a series of at least two sequential, mixing stage(s), although sometimes one mixing stage might be used, to a temperature in a range of 130°C to 140°C, and such mixing stages are typically referred to as non-productive mixing stages. Thereafter, the sulfur and accelerators, and possibly one or more retarders and one or more antidegradants, are mixed therewith to a temperature of 90°C to 120°C and is typically referred as a productive mix stage.

After mixing, the compounded rubber can be fabricated such as, for example, by extrusion through a suitable die to form a tire component such as, for example, a tire tread strip. The tire tread rubber strip is then typically built onto a sulfur curable tire carcass and the assembly thereof shaped and cured in a suitable mold under conditions of elevated temperature and pressure by methods well-known to those having skill in such art.

The invention may be better understood by reference to the following example in which the parts and percentages are by weight unless otherwise indicated.

### EXAMPLE I

Rubber compositions are prepared to evaluate combinations of various ingredients to achieve significant cured rubber properties relating to rebound and abrasion resistance properties.

Predictive tread wet performance properties are to be evaluated such as for example physical properties of lower rebound value at 0°C, which is individually indicative of higher hysteresis of the rubber composition which promotes dampening of the rubber composition for promoting improved, higher, wet traction for a tire tread, and higher tan delta value at -10°C for the rubber composition, which is also, individually, indicative of improved wet traction for a tire tread, while also presenting suitable physical properties such as abrasion resistance and rebound properties at 23°C to 100°C.

Therefore, it is desired that the rubber composition has a relatively low rebound value at 0°C and a relatively high tan delta at -10°C.

Experimental Rubber Sample A was prepared to evaluate promoting indicative wet traction for a tire tread rubber composition (e.g. relatively low rebound values at 0 °C and also relatively high Tan delta values at -10°C) for the rubber composition).

Experimental rubber Sample B was prepared to evaluate promoting both wet traction and resistance to treadwear (e.g. resistance to abrasion for the rubber composition). It is to be appreciated that for Experimental rubber Sample B, a styrene/alpha-methylstyrene resin added and the rubber composition was adjusted for said specialized polybutadiene rubber used in amount of 22.5 phr, the natural rubber used in an amount of 7.5 phr, the rubber processing oil in an amount of 7.5 phr and the coupling agent composite in an amount of 15.6 phr.

Basic ingredients for the rubber compositions are illustrated in Table 1 and reported in terms of parts by weight per 100 parts rubber (phr) unless otherwise indicated.

The rubber compositions can be prepared by mixing the elastomers(s) without sulfur and sulfur cure accelerators in a first non-productive mixing stage (NP-1) in an internal rubber mixer for 4 minutes to a temperature of 140°C. The rubber mixture was then mixed in a second non-productive mixing stage (NP-2) in an internal rubber mixer for 4 minutes to a temperature of 140°C with further addition of ingredients. The rubber mixture was then mixed in a third non-productive mixing stage (NP-3) in an internal rubber mixer for 4 minutes to a temperature of 140°C without further addition of ingredients. The resulting rubber mixture was then mixed in a productive mixing stage (PR) in an internal rubber mixer with sulfur and sulfur cure accelerator(s) being added for 2 minutes to a temperature of 110°C. The rubber composition was dumped from each mixer and sheeted out and cooled to below 50°C between each of the non-productive mixing steps and prior to the productive mixing step.

**Table 1**

| | Experimental Samples | |
|---|---|---|
| Material | A | B |
| Non-productive mixing (NP-1) | | |
| Functionalized SBR rubber¹ | 70 | 70 |
| Natural rubber² | 15 | 7.5 |
| Specialized butadiene rubber³ | 15 | 22.5 |
| Microcrystalline wax | 1.5 | 1.5 |
| Fatty acid⁴ | 2 | 2 |
| Naphthenic rubber processing oil⁵ | 10 | 7.5 |
| Zinc oxide | 0 | 0 |
| Precipitated silcia⁶ | 50 | 50 |
| Non-productive mixing (NP-2) | | |
| Resin⁷ | 0 | 5 |
| Antidegradant | 2 | 2 |
| Precipitated silica⁶ | 15 | 15 |
| Coupling agent⁸ | 10.4 | 15.6 |
| Non-productive mixing (NP-3) | | |
| No ingredients added | | |
| Productive mixing (PR) | | |
| Sulfur | 1.6 | 1 |
| Accelerators⁹ | 3.1 | 3.1 |
| Zinc oxide | 1 | 1 |
| Antidegradant | 0.75 | 0.75 |

| | | |
|---|---|---|
| ¹Functionalized SBR as a solution polymerization prepared styrene/butadiene rubber functionalized with an alkoxysilane group and functional group comprising a thiol group and having a Tg in a range of from -30° to -10°C as SLR SE4602™ from Dow Olefinverbund GmbH; ²Natural cis 1,4-polyisoprene natural rubber as SMR-20 having a Tg of about -65°C. ³Polybutadiene rubber having a microstructure comprising 96 to 98 percent cis 1,4-isomeric units, 1 to 3 percent trans 1,4-isomeric units and 0.3 to 1 percent vinyl 1,2-content; a number average molecular weight (Mn) in a range of from 230,000 to 250,000 with a heterogeneity index (Mw/Mn) in a range of from 1.5/1 to 2/1, and a Tg in a range of from -104 to -109°C, as CB25™ from Lanxess. ⁴Fatty acid comprising primarily a combination of stearic acid, oleic and palmitic acid ⁵Rubber processing oil having a Tg of -50°C which is a paraffinic/naphthenic oil having a high paraffinic oil content of 45 to 55 weight and a naphthenic oil content of 30 to 40 percent which might be referred to as being primarily a paraffinic oil of a relatively high Tg. ⁶As Zeosil 1165 MP™ from Rhodia ⁷Styrene/alphamethylstyrene resin as Eastman Resin 2336™ from the Eastman Chemical company to promote wet traction having a softening point (Sp) of 85°C and a styrene content of 20 percent. ⁸A 50/50 (by weight) composite of carbon black and bis-(3-triethoxysilylpropyl) poly sulfide having an average in a range of from 3.6 to 4 connecting sulfur atoms in its polysulfidic bridge from Evonic Degussa, identified as Si69™ and reported in the Table as the composite. ⁹Accelerators as a combination of sulfenamide and diphenylguanidine | | |

The prepared rubber compositions were cured at a temperature of 160°C for 14 minutes and the resulting cured rubber samples evaluated for various physical properties (rounded numbers are reported herein) as shown in the following Table 2.

**Table 2**

| | Experimental Samples | |
|---|---|---|
| Material | A | B |
| Functionalized SBR rubber | 70 | 70 |
| Natural rubber | 15 | 7.5 |
| Specialized polybutadiene rubber | 15 | 22.5 |
| Naphthenic rubber processing oil | 10 | 7.5 |
| Precipitated silica | 65 | 65 |
| Resin | 0 | 5 |
| Coupling agent | 10.4 | 15.6 |
| Properties | | |
| RPA¹ | | |
| Uncured G', 0.83 Hz, 100°C, 15% strain (MPa) | 0.32 | 0.34 |
| Cured G', 11 Hz, 40°C, 1% strain (MPa) | 4.02 | 2.83 |
| Tan delta, 11 Hz, 40 °C, 1% strain | 0.08 | 0.098 |
| Cured G', 11 Hz, 100°C, 10% strain (MPa) | 2.2 | 1.76 |
| Tan delta, 11 Hz, 100°C, 10% strain | 0.09 | 0.08 |
| Tan delta, 11 Hz, -10°C, 0.5% strain | 0.43 | 0.39 |
| ATS², stress-strain | | |
| Tensile strength (MPa) | 17.63 | 17.81 |
| Elongation at break (%) | 409 | 407 |
| 300% modulus, ring, (MPa) | 12.64 | 12.65 |
| Rebound value(Zwick) | | |
| 0°C | 15 | 18.4 |
| ATS² Rebound value | | |
| 23°C | 44 | 49.5 |
| 100°C | 70 | 71.6 |
| Shore A Hardness | | |
| 23°C | 68 | 64 |
| 100°C | 63 | 60 |
| Abrasion rate (mg/km), Grosch³ | | |
| Medium (40N), 6° slip angle, speed = 20 km/h, distance = 1,000 meters | 49.75 | 36 |

| | | |
|---|---|---|
| ¹Rubber process analyzer instrument (e.g. Rubber Process Analyzer RPA 2000) ²Automated Testing System instrument by Instron for determining ultimate tensile strength, ultimate elongation, modulii, etc, of rubber samples ³The Grosch abrasion rate run on a LAT-100 Abrader and is measured in terms of mg/km of rubber abraded away. The test rubber sample is placed at a slip angle under constant load (Newtons) as it traverses a given distance on a rotating abrasive disk (disk from HB Schleifmittel GmbH). Frictional forces, both lateral and circumferential, generated by the abrading sample can be measured together with the load (Newtons) using a custom tri-axial load cell. The surface temperature of the abrading wheel is monitored during testing and reported as an average temperature. | | |

In practice, a Low abrasion severity test may be run, for example, at a load of 20 Newtons at a slip angle of 2 degrees and a disk speed of 20 or 40 kph (kilometers per hour) at a sample travel of 7,500 m. A Medium abrasion severity test may be run, for example, at a load of 40 Newtons at a slip angle of 6 degrees and a disk speed of 20 kph and a sample travel of 1,000 m. A High abrasion severity test may be run, for example, at a load of 70 Newtons at a slip angle of 12 degrees and a disk speed of 20 kph and a sample travel of 250 m.

From Table 2 it is seen that Experimental rubber Sample A had a 0°C Zwick rebound value of 15 and a -10°C tan delta value of 0.43 (at 11 Hz, 0.5% strain) which are considered herein to be independently indicative of a tire tread of suitable wet skid resistance for a tire tread of such rubber composition.

From Table 2 it can also be seen that Experimental rubber Sample B had a 0°C Zwick rebound value of 18.4 and a -10°C tan delta value of 0.39 (at 11 Hz, 0.5% strain) which are also considered herein to be independently indicative of a tire tread of suitable wet skid resistance for a tire tread of such rubber composition.

It can additionally be seen from Table 2 that the 40°C tan delta value (at 11 Hz, 1% strain) of 0.08 for Experimental rubber Sample A and 0.098 for Experimental rubber Sample B, respectively, were substantially the same.

It can further be seen from Table 2 that the Grosch abrasion rate of 36 (mg/km) for Experimental rubber Sample B was significantly and beneficially lower than the Grosch abrasion rate of 49.75 for Experimental rubber Sample A.

It is to be appreciated that Experimental rubber Samples A and B which utilized a combination of functionalized SBR, specialized polybutadiene rubber of a defined microstructure, molecular weight and heterogeneity index, as well as a relatively high Tg promoting rubber processing oil and a higher Tg promoting natural rubber together with a precipitated silica/coupling agent combination where the coupling agent had polysulfidic component with an average in a range of from about 3 to about 4 connecting sulfur content.

It is believed that this evaluated combination of ingredients contributed to aforesaid beneficial physical properties relative to indicative tire tread wet traction.

The 40°C tan delta values for Experimental rubber Samples A and B were substantially the same which is indicative of the same or similar tire tread rolling resistance of a tire of such rubber composition(s).

Therefore, it is considered herein that the rubber compositions of evaluated Experimental rubber Samples A and B did not significantly detract from an indicative tire tread rolling resistance.

The 23°C rebound value of 44 for Experimental rubber Sample A was significantly less than the 23°C rebound value of 49.5 for Experimental rubber Sample B, which further contained the styrene/alpha-methylstyrene resin which is indicative of improved (reduced) rolling resistance.

The Grosch abrasion rate of 36 (mg/km) for Experimental rubber Sample B, which contained the styrene/alpha-methylstyrene resin, was significantly lower than the Grosch abrasion rate of 49.8 for Experimental rubber Sample A, thereby indicating that the modified formulation, including the styrene/alpha-methylstyrene resin beneficially contributed to the abrasion resistance of the rubber composition of Experimental rubber Sample B.

### Conclusions

It is concluded that this evaluation indicates that the Experimental rubber Samples A and B provided rubber compositions that are indicative of suitable wet traction for a tire tread of such rubber compositions, thereby a predictive relatively short stopping distance for wet road conditions, while having a suitable physical property such as rolling resistance for a tire with a tread of such rubber composition and resistance to abrasion.

It further concluded from this evaluation that the increased amount of silica coupling agent for Experimental rubber Sample B worked to enhance the silica filler/elastomer network of the rubber composition and thereby promote an increased resistance to abrasion to balance the inclusion of the small amount of the styrene/alpha-methylstyrene resin added to promote wet traction.

## Claims

1. A rubber composition comprising, based upon parts by weight per 100 parts by weight of rubber (phr):
(A) an elastomer comprising:
(1) from 50 to 80 phr of a solution polymerized styrene/butadiene rubber functionalized with an alkoxysilane group and at least one functional group comprising amine, preferably primary amine, and thiol units, and having a Tg in a range of from -40°C to -10°C;
(2) from 10 to 40 phr of a cis 1,4-polybutadiene rubber;
(3) 5 to 40 phr of cis 1,4-polyisoprene rubber having a Tg in a range of from -65 °C to -70 °C;
(B) 5 to 20 phr of a naphthenic rubber processing oil having a Tg in a range of from 80 °C to 90 °C;
(C) 40 to 110 phr of a reinforcing filler comprising silica or a combination of silica and carbon black;
(D) optionally from 2 to 15 phr of a styrene/alpha-methylstyrene resin;
(E) a coupling agent having a moiety reactive with hydroxyl groups contained on the surface of the silica and another moiety interactive with at least one of said elastomers;
wherein the cis 1,4-polybutadiene rubber has a microstructure comprising 96 to 98 percent cis 1,4-isomeric units, 1 to 3 percent trans 1,4-isomeric units and 0.3 to 1 percent vinyl 1,2-content and a Tg in a range of from -104°C to -109°C; and
wherein the functionalized styrene/butadiene rubber (SBR) has a bound styrene content in a range of from 10 to 50 or from 10 to 30 percent.

2. The rubber composition of claim 1 wherein the rubber composition comprises 2 to 15 phr of the styrene/alpha-methylstyrene resin, and/or wherein the styrene/alpha-methylstyrene resin has a softening point (Sp) in a range of from 80°C to 90 °C with a styrene content in a range of from 10 to 50 or from 10 to 30 percent.

3. The rubber composition of claim 1 or 2 wherein the reinforcing filler comprising the silica or the combination of silica and carbon black is:
(i) amorphous or precipitated silica, or
(ii) a combination of silica, preferably precipitated or amorphous silica, and carbon black wherein the reinforcing filler contains from 55 to 75 weight percent of the carbon black, or
(iii) a combination of silica, preferably precipitated or amorphous silica, and carbon black wherein the reinforcing filler contains up to 25 weight percent of the carbon black, or
(iv) a combination of silica, precipitated or amorphous silica, and carbon black wherein the reinforcing filler contains from 15 to 50 weight percent of the carbon black.

4. The rubber composition of at least one of the previous claims wherein the coupling agent comprises a bis-(3-ethoxysilylpropyl) polysulfide material having an average of from 2 to 4, alternatively from 2 to 3, connecting sulfur atoms in the polysulfide bridge.

5. The rubber composition of at least one of the previous claims wherein the polybutadiene rubber has a number average molecular weight (Mn) in a range of from 230,000 to 250,000 and/or a heterogeneity index (Mw/Mn) in a range of from 1.5/1 to 2/1.

6. The rubber composition of at least one of the previous claims wherein the functionalized styrene/butadiene rubber (SBR) has a bound styrene content in a range of from 10 to 30 percent, and/or a vinyl content in a range of from 35 to 45 percent based on the SBR and contained in its polybutadiene portion.

7. The rubber composition of at least one of the previous claims wherein the rubber composition contains the styrene/alpha-styrene resin, and/or wherein the polybutadiene rubber is used in amount ranging from 15 to 25 phr, the cis 1,4-polyisoprene rubber is used in an amount ranging from 5 to 10 phr and the rubber processing oil is used in an amount ranging from 5 to 10 phr.

8. The rubber composition of at least one of the previous claims wherein the styrene/butadiene rubber is of the formula (I) or (II) 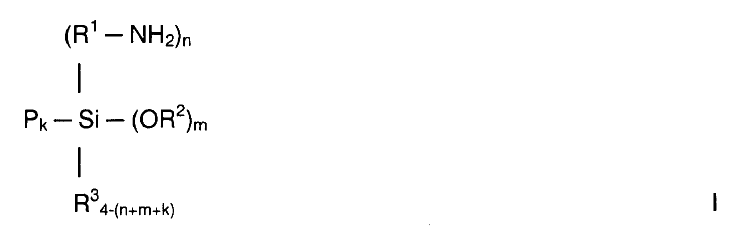 wherein P is a styrene/butadiene copolymer chain, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 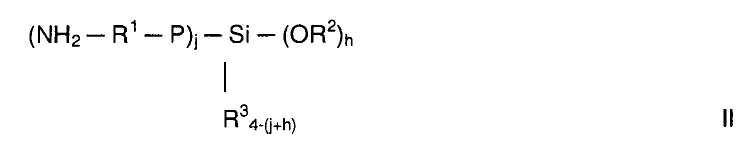 wherein P, R¹, R² and R³ have the same definitions as give for the above-mentioned formula I, j is an integer of 1 to 3, and h is an integer of 1 to 3, with the provision that j+h is an integer of 2 to 4.

9. The rubber composition of at least one of the previous claims wherein the functionalized styrene/butadiene rubber comprises the reaction product of a living anionic polymer comprising a compound represented by the formula IV
(R⁴O)ₓR⁴_{y}Si-R⁵ - S - SiR⁴₃ IV
wherein Si is silicon; S is sulfur; O is oxygen; x is an integer selected from 1, 2 and 3; y is an integer selected from 0, 1, and 2; x+y=3; R⁴ is the same or different and is (C₁-C₁₆) alkyl; and R' is aryl, and alkyl aryl, or (C₁-C₁₆) alkyl.

10. A method of manufacturing the rubber composition in accordance with at least one of the previous claims wherein the functionalized styrene-butadiene rubber is obtained by copolymerizing styrene and 1,3-butadiene having a primary amine group and/or a thiol group and an alkoxysilyl group bonded to the polymer chain, wherein the primary amine group and/or thiol group is preferably introduced to the polymerization initiating terminal or the polymerization terminating terminal.

11. The method of claim 10 wherein
(i) the alkoxysilyl group comprises at least one of a methoxysilyl group and an ethoxysilyl group; and/or
(ii) the content of the alkoxysilyl group bonded to the polymer chain of the styrene/butadiene rubber is from 0.5 to 200 mmol/kg of the styrene/butadiene rubber; and/or
(iii) the primary amine group and/or thiol group and/or the alkoxysilyl group is bonded to any of a polymerization initiating terminal, a polymerization terminating terminal, a main chain of the styrene/butadiene rubber and as a side chain of the styrene/butadiene rubber, as long as the group is bonded to the styrene-butadiene rubber chain.

12. The method of claim 10 or 11 wherein
(i) the compound having a primary amine group and an alkoxysilyl group comprises at least one of N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)amino-ethyltrimethoxysilane, N,N-bis(trimethylsilyl)-aminoethyltriethoxysilne, N,N-bis(trimethylsilyl)aminoethylmethyldimethoxysilane, N,N-bis(trimethylsilyl)amino-ethylmethyldiethoxysilane, etc., and preferred are 1-trimethylsilyl-2,2-dimethoxy-1-aza-2-silacyclopentane, N,N-bis(trimethylsilyl) aminopropylmethyldimethoxysilane and N,N-bis(trimethylsilyl)aminopropylmethyldiethoxysilane; or
(ii) the compound having a primary amine group and an alkoxysilyl group comprises a compound of the following formula III
RN - (CH₂)ₓSi(OR)₃ III
wherein R in combination with the nitrogen (N) atom is a protected amine group which upon appropriate post-treatment yields a primary amine, R represents a group having 1 to 18 carbon atoms selected from an alkyl, a cycloalkyl, an allyl, or an aryl; and x is an integer from 1 to 20.

13. The method of at least one of the previous claims 10 to 12 wherein
(i) the styrene/butadiene rubber is produced by polymerizing styrene and butadiene in a hydrocarbon solvent by anionic polymerization using an organic alkali metal and/or an organic alkali earth metal as an initiator, adding a terminating agent compound having a primary amine group protected with a protective group and/or a thiol group protected with a protecting group and an alkoxysilyl group to react it with a living polymer chain terminal at the time when the polymerization has substantially completed, and then conducting deblocking of the protective group; and/or
(ii) the polybutadiene elastomer is prepared by polymerization of 1,3-polybutadiene monomer in an organic solvent solution in the presence of a catalyst comprising a neodymium compound, an aluminum alkyl and an aluminum chloride delivering compound, so long as it possesses the aforesaid microstructure, molecular weight and heterogeneity index and Tg ranges, wherein the neodymium compounds comprises at least one of neodymium neodecanoate and neodymium octanoate; the aluminum alkyl comprises at least one of triisobutylaluminum (TIBA) and diisobutylaluminum hydride (DIBAH), and the aluminum chloride delivering compound comprises of diethylaluminum chloride.

14. A tire having a component comprising the rubber composition in accordance with at least one of the claims 1 to 9.

15. The tire of claim 14 wherein the component is a tire tread.

## Patentansprüche

1. Kautschukzusammensetzung, umfassend, auf Basis von Gewichtsteilen je 100 Gewichtsteile Kautschuk (ThK):
(A) ein Elastomer, umfassend
(1) 50 bis 80 ThK eines lösungspolymerisierten Styrol-Butadien-Kautschuks, funktionalisiert mit einer Alkoxysilangruppe und mindestens einer Funktionsgruppe, umfassend Amin-, bevorzugt primäres Amin, und Thioleinheiten, und mit einer Tg in einem Bereich von -40 °C bis -10 °C;
(2) 10 bis 40 ThK eines cis-1,4-Polybutadienkautschuks;
(3) 5 bis 40 ThK cis-1,4-Polyisoprenkautschuk mit einer Tg in einem Bereich von -65°C bis -70°C;
(B) 5 bis 20 ThK eines naphthenischen Kautschukprozessöls mit einer Tg in einem Bereich von 80°C bis 90°C;
(C) 40 bis 110 ThK eines Verstärkungsfüllstoffs, umfassend Silika oder eine Kombination von Silika und Carbon Black;
(D) optional 2 bis 15 ThK eines Styrol-/Alphamethylstyrolharzes;
(E) einen Haftvermittler mit einem Anteil, der mit an der Oberfläche des Silikas enthaltenen Hydroxylgruppen reaktiv ist, und einem anderen Anteil, der mit mindestens einem der besagten Elastomere reaktiv ist;
wobei der cis-1,4-Polybutadienkautschuk eine Mikrostruktur aufweist, die 96 bis 98 Prozent cis-1,4-lsomereinheiten, 1 bis 3 Prozent trans-1,4-Isomereinheiten und 0,3 bis 1 Prozent Vinyl-1,2-Gehalt und eine Tg in einem Bereich von -104 °C bis -109 °C aufweist; und
wobei der funktionalisierte Styrol-Butadienkautschuk (SBR) einen Gehalt an gebundenem Styrol in einem Bereich von 10 bis 50 oder von 10 bis 30 Prozent aufweist.

2. Kautschukzusammensetzung nach Anspruch 1, wobei die Kautschukzusammensetzung 2 bis 15 ThK des Styrol-/Alphamethylstyrolharzes umfasst, und/oder wobei das Styrol-/Alphamethylstyrolharz einen Erweichungspunkt (Sp) in einem Bereich von 80°C bis 90°C bei einem Styrolgehalt in einem Bereich von 10 bis 50 oder von 10 bis 30 Prozent aufweist.

3. Kautschukzusammensetzung nach Anspruch 1 oder 2, wobei der das Silika oder die Kombination von Silika und Carbon Black umfassende Verstärkungsfüllstoff ist:
(i) amorphes oder ausgefälltes Silika, oder
(ii) eine Kombination von Silika, bevorzugt ausgefälltes oder amorphes Silika, und Carbon Black, wobei der Verstärkungsfüllstoff 55 bis 75 Gewichtsprozent des Carbon Blacks enthält, oder
(iii) eine Kombination von Silika, bevorzugt ausgefälltes oder amorphes Silika, und Carbon Black, wobei der Verstärkungsfüllstoff bis zu 25 Gewichtsprozent des Carbon Blacks enthält, oder
(iv) eine Kombination von Silika, bevorzugt ausgefälltes oder amorphes Silika, und Carbon Black, wobei der Verstärkungsfüllstoff 15 bis 50 Gewichtsprozent des Carbon Blacks enthält.

4. Kautschukzusammensetzung nach mindestens einem der vorgenannten Ansprüche, wobei der Haftvermittler ein bis-(3-Ethoxysilylpropyl)polysulfidmaterial mit einem Durchschnitt von 2 bis 4, alternativ von 2 bis 3, verbindenden Schwefelatomen in der Polysulfidbrücke umfasst.

5. Kautschukzusammensetzung nach mindestens einem der vorgenannten Ansprüche, wobei der Polybutadienkautschuk eine zahlenmittlere Molmasse (Mn) in einem Bereich von 230.000 bis 250.000 und/oder einen Heterogenitätsindex (Mw/Mn) in einem Bereich von 1,5:1 bis 2:1 aufweist.

6. Kautschukzusammensetzung nach mindestens einem der vorgenannten Ansprüche, wobei der funktionalisierte Styrol-Butadien-Kautschuk (SBR) einen Gehalt an gebundenem Styrol in einem Bereich von 10 bis 30 Prozent und/oder einen Vinylgehalt in einem Bereich von 35 bis 45 Prozent, basiert auf dem SBR und in seinem Polybutadienanteil enthalten aufweist.

7. Kautschukzusammensetzung nach mindestens einem der vorgenannten Ansprüche, wobei die Kautschukzusammensetzung das Styrol-/Alphastyrolharz enthält, und/oder wobei der Polybutadienkautschuk in einer Menge verwendet wird, die sich auf 15 bis 25 ThK beläuft, der cis-1,4-Polyisoprenkautschuk in einer Menge verwendet wird, die sich auf 5 bis 10 ThK beläuft und das Kautschukprozessöl in einer Menge verwendet wird, die sich auf 5 bis 10 ThK beläuft.

8. Kautschukzusammensetzung nach mindestens einem der vorgenannten Ansprüche, wobei der Styrol-Butadien-Kautschuk die Formel (I) oder (II) aufweist 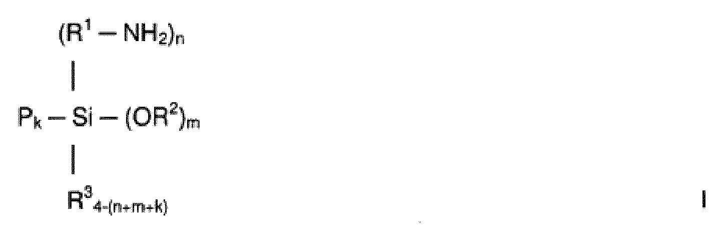 wobei P eine Styrol-/Butadien-Copolymerkette ist, R¹ eine Alkylengruppe mit 1 bis 12 Kohlenstoffatomen ist, R² und R³ jedes unabhängig eine Alkylgruppe mit 1 bis 20 Kohlenstoffatomen, eine Allylgruppe oder eine Arylgruppe sind, n eine ganze Zahl von 1 oder 2 ist, m eine ganze Zahl von 1 oder 2 ist, und k eine ganze Zahl von 1 oder 2 ist, unter dem Vorbehalt, dass n+m+k eine ganze Zahl von 3 oder 4 ist, 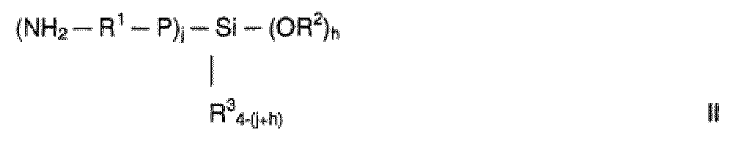 wobei P, R¹, R² und R³ dieselben Definitionen aufweisen, wie für die vorgenannte Formel I angegeben, j eine ganze Zahl von 1 bis 3 ist und h eine ganze Zahl von 1 bis 3 ist, unter dem Vorbehalt, dass j+h eine ganze Zahl von 2 bis 4 ist.

9. Kautschukzusammensetzung nach mindestens einem der vorgenannten Ansprüche, wobei der funktionalisierte Styrol-Butadien-Kautschuk das Reaktionsprodukt eines lebenden anionischen Polymers umfasst, das eine Verbindung umfasst, dargestellt durch die Formel IV
**(R⁴O)ₓR⁴_{y}Si-R⁵-S- SiR4₃** IV
wobei Si Silizium ist; S Schwefel ist; O Sauerstoff ist; x eine aus 1, 2 und 3 ausgewählte ganze Zahl ist; Y eine aus 0, 1 und 2 ausgewählte ganze Zahl ist; x+y=3; R⁴ das gleiche oder verschieden ist und (C₁-C₁₆)-Alkyl ist; und R' Aryl, und Alkylaryl oder (C₁-C₁₆)-Alkyl ist.

10. Verfahren zur Herstellung der Kautschukzusammensetzung gemäß mindestens einem der vorgenannten Ansprüche, wobei der funktionalisierte Styrol-Butadien-Kautschuk erhalten wird durch Copolymerisieren von Styrol und 1,3-Butadien, das eine primäre Amingruppe und/oder eine Thiolgruppe und eine Alkoxysilylgruppe an die Polymerkette gebunden aufweist, wobei die primäre Amingruppe und/oder Thiolgruppe bevorzugt in die polymerisationseinleitende endständige Gruppe oder die polymerisationsbeendende endständige Gruppe eingebracht wird.

11. Verfahren nach Anspruch 10, wobei
(i) die Alkoxysilylgruppe mindestens eines einer Methoxysilylgruppe und einer Ethoxysilylgruppe umfasst; und/oder
(ii) der Gehalt der an die Polymerkette des Styrol-Butadien-Kautschuks gebundenen Alkoxysilylgruppe 0,5 bis 200 mmol/kg des Styrol-Butadien-Kautschuks beträgt; und/oder
(iii) die primäre Amingruppe und/oder Thiolgruppe und/oder die Alkoxysilylgruppe an gleich welches einer polymerisationseinleitenden endständigen Gruppe, einer polymerisationsbeendenden endständigen Gruppe, einer Hauptkette des Styrol-Butadien-Kautschuks und als eine Seitenkette des Styrol-Butadien-Kautschuks gebunden ist, solange die Gruppe an die Styrol-Butadien-Kautschukkette gebunden ist.

12. Verfahren nach Anspruch 10 oder 11, wobei
(i) die Verbindung, welche eine primäre Amingruppe und eine Alkoxysilylgruppe aufweist, mindestens eines umfasst von N,N-bis(Trimethylsilyl)aminopropylmethyldimethoxysilan, 1-Trimethylsilyl-2,2-dimethoxy-1-aza-2-silacyclopentan, N,N-bis(Trimethylsilyl)aminopropyltrimethoxysilan, N,N-bis(Trimethylsilyl)aminopropyltriethoxysilan, N,N-bis(Trimethylsilyl)aminopropylmethyldiethoxysilan, N,N-bis(Trimethylsilyl)-aminoethyltrimethoxysilan, N,N-bis(Trimethylsilyl)-aminoethyltriethoxysilan, N,N-bis(Trimethylsilyl)aminoethylmethyldimethoxysilan, N,N-bis(Trimethylsilyl)aminoethylmethyldiethoxysilan, etc., und bevorzugt werden 1 -Trimethylsilyl-2,2-dimethoxy-1 -aza-2-silacyclopentan, N,N-bis(Trimethylsilyl)aminopropylmethyldimethoxysilan und N,N-bis(Trimethylsilyl)aminopropylmethyldiethoxysilan; oder
(ii) die Verbindung, welche eine primäre Amingruppe und eine Alkoxysilylgruppe aufweist, eine Verbindung umfasst der folgenden Formel III:
**RN - (CH₂)ₓSi(OR)₃** **III**
wobei R in Kombination mit dem Stickstoff(N)-Atom eine geschützte Amingruppe ist, die bei geeigneter Nachbehandlung ein primäres Amin ergibt, R eine Gruppe mit 1 bis 18 Kohlenstoffatomen darstellt, ausgewählt aus einem Alkyl, einem Cycloalkyl, einem Allyl oder einem Aryl; und x eine ganze Zahl von 1 bis 20 ist.

13. Verfahren nach mindestens einem der vorgenannten Ansprüche 1 bis 12, wobei
(i) der Styrol-Butadien-Kautschuk produziert wird durch Polymerisieren und Styrol und Butadien in einem Kohlenwasserstofflösungsmittel durch anionische Polymerisation unter Verwendung eines organischen Alkalimetalls und/oder eines organischen Erdalkalimetalls als Initiator, Zusetzen einer Beendigungsmittelverbindung mit einer primären Amingruppe, die mit einer Schutzgruppe geschützt ist, und/oder einer Thiolgruppe, die mit einer Schutzgruppe geschützt ist, und einer Alkoxysilylgruppe, um sie mit einer lebenden Polymerkettenendgruppe zu der Zeit zu reagieren, wenn die Polymerisation im Wesentlichen abgeschlossen ist, und dann Durchführen des Deblockierens der Schutzgruppe; und/oder
(ii) das Polybutadienelastomer hergestellt wird durch Polymerisation von 1,3-Polybutadienmonomer in einer organischen Lösungsmittellösung in Gegenwart eines Katalysators, der eine Neodymverbindung, eine Aluminiumalkyl und eine Aluminiumchlorid liefernde Verbindung umfasst, solange es die vorgenannte Mikrostruktur, Molmasse und Heterogenitätsindex und Tg-Bereiche besitzt, wobei die Neodymverbindung mindestens eines von Neodymneodecanoat und Neodymoctanoat umfasst; das Aluminiumalkyl mindestens eines von Triisobutylaluminium (TIBA) und Diisobutylaluminiumhybrid (DIBAH) umfasst und die Aluminiumchlorid liefernde Verbindung aus Diethylaluminiumchlorid besteht.

14. Reifen mit einem Bauteil, umfassend die Kautschukzusammensetzung gemäß mindestens einem der Ansprüche 1 bis 9.

15. Reifen nach Anspruch 14, wobei das Bauteil eine Reifenlauffläche ist.

## Revendications

1. Composition de caoutchouc comprenant, en se basant sur des parties en poids par 100 parties en poids de caoutchouc (phr) :
(A) un élastomère comprenant :
(1) à concurrence de 50 à 80 phr, un caoutchouc de styrène/butadiène polymérisé en solution, fonctionnalisé avec un groupe alcoxysilane et au moins un groupe fonctionnel comprenant une amine, de préférence une amine primaire, et des unités de thiol, et possédant une valeur Tg dans la plage de -40°C à -10°C;
(2) à concurrence de 10 à 40 phr, un caoutchouc de 1,4-cis-polybutadiène ;
(3) à concurrence de 5 à 40 phr, un caoutchouc de 1,4-cis-polyisoprène possédant une valeur Tg dans la plage de -65 °C à -70 °C ;
(B) à concurrence de 5 à 20 phr, une huile naphténique pour le traitement du caoutchouc possédant une valeur Tg dans la plage de 80 °C à 90 °C ;
(C) à concurrence de 40 à 110 phr, une matière de charge de renforcement comprenant de la silice ou une combinaison de silice et de noir de carbone ;
(D) de manière facultative, à concurrence de 2 à 15 phr, une résine de styrène/α-méthylstyrène ;
(E) un agent de couplage possédant une fraction apte à réagir avec les groupes hydroxyle contenus à la surface de la silice et une autre fraction entrant en interaction avec au moins un desdits élastomères ;
dans laquelle le caoutchouc de 1,4-cis-polybutadiène possède une microstructure comprenant, à concurrence de 96 à 98 %, des unités isomères 1,4-cis, à concurrence de 13 % des unités isomères 1,4-trans, une teneur en groupes 1,2-vinyle à concurrence de 0,3 à 1 %, et une valeur Tg dans la plage de -104 °C à -109 °C ; et
dans laquelle le caoutchouc fonctionnalisé de styrène/butadiène (SBR) possède une teneur en styrène lié dans la plage de 10 à 50 ou de 10 à 30 %.

2. Composition de caoutchouc selon la revendication 1, dans laquelle la composition de caoutchouc comprend la résine de styrène/α-méthylstyrène à concurrence de 2 à 15 phr, et/ou dans laquelle la résine de styrène/α-méthylstyrène possède un point de ramollissement (Sp) dans la plage de 80 °C à 90 °C, avec une teneur en styrène dans la plage de 10 à 50 ou de 10 à 30 %.

3. Composition de caoutchouc selon la revendication 1 ou 2, dans laquelle la matière de charge de renforcement comprenant la silice ou la combinaison de silice et de noir de carbone est :
(i) de la silice amorphe ou précipitée ;
(ii) une combinaison de silice, de préférence de la silice amorphe ou précipitée, et de noir de carbone, la matière de charge de renforcement contenant du noir de carbone à concurrence de 55 à 75 % en poids ; ou
(iii) une combinaison de silice, de préférence de la silice amorphe ou précipitée, et de noir de carbone, la matière de charge de renforcement contenant du noir de carbone jusqu'à concurrence de 25 % en poids ; ou
(iv) une combinaison de silice, de préférence de la silice amorphe ou précipitée, et de noir de carbone, la matière de charge de renforcement comprenant du noir de carbone à concurrence de 15 à 50 % en poids.

4. Composition de caoutchouc selon au moins une des revendications précédentes, dans laquelle l'agent de couplage comprend une matière de bis-(3-éthoxysilylpropyl) polysulfure possédant en moyenne de 2 à 4, en variante 2 à 3 atomes de soufre de liaison dans le pont polysulfure.

5. Composition de caoutchouc selon au moins une des revendications précédentes, dans laquelle le caoutchouc de polybutadiène possède un poids moléculaire moyen en nombre (Mn) dans la plage de 230.000 à 250.000 et/ou un indice d'hétérogénéité (Mw/Mn) dans la plage de 1,5/1 à 2/1.

6. Composition de caoutchouc selon au moins une des revendications précédentes, dans laquelle le caoutchouc fonctionnalisé de styrène/butadiène (SBR) possède une teneur en styrène lié dans la plage de 10 à 30 % et/ou une teneur en groupes vinyle dans la plage de 35 à 45 %, basés sur le SBR et contenus dans sa portion de polybutadiène.

7. Composition de caoutchouc selon au moins une des revendications précédentes, dans laquelle la composition de caoutchouc contient la résine de styrène/α-styrène et/ou dans laquelle le caoutchouc de polybutadiène est utilisé en une quantité de 15 à 25 phr, le caoutchouc de 1,4-cis-polyisoprène est utilisé en une quantité dans la plage de 5 à 10 phr et l'huile plastifiante pour le caoutchouc est utilisée en une quantité dans la plage de 5 à 10 phr.

8. Composition de caoutchouc selon au moins une des revendications précédentes, dans laquelle le caoutchouc de styrène/butadiène répond à la formule (I) ou (II) : 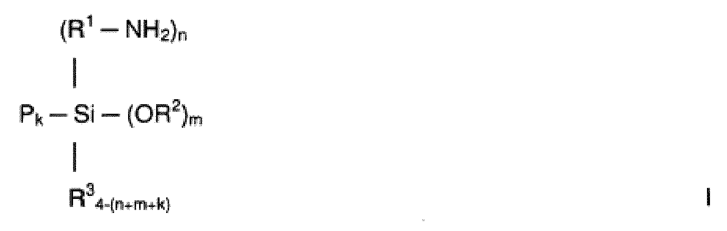 dans laquelle P représente une chaîne de copolymère de styrène/butadiène, R¹ représente un groupe alkylène contenant de 1 à 12 atomes de carbone, R² et R³ représentent, chacun de manière indépendante, un groupe alkyle contenant de 1 à 20 atomes de carbone, un groupe alkyle ou un groupe aryle, n représente un entier de 1 à 2, m représente un entier de 1 à 2 et k représente un entier de 1 à 2, avec cette réserve que n+m+k représente un entier de 3 ou 4, 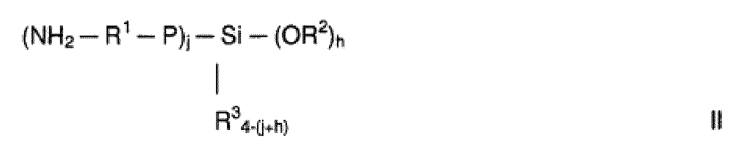 dans laquelle P, R¹, R² et R³ ont les mêmes définitions que celles indiquées pour la formule I ci-dessus, j représente un entier de 1 à 3, et h représente un entier de 1 à 3, avec cette réserve que j+h représente un entier de 2 à 4.

9. Composition de caoutchouc selon au moins une des revendications précédentes, dans laquelle le caoutchouc de styrène/butadiène comprend le produit réactionnel d'un polymère anionique vivant comprenant un composé répondant à la formule IV
**(R⁴O)ₓR⁴_{y}Si-R⁵-S-SiR⁴₃** **IV**
dans laquelle Si représente un atome de silicium ; S représente un atome de soufre ; O représente un atome d'oxygène ; x représente un entier choisi parmi 1, 2 et 3 ; y représente un entier choisi parmi 0, 1 et 2 ; x+y = 3 ; R⁴ représente des radicaux identiques ou différents et représente un groupe alkyle en C₁-C₁₆; et R' représente un groupe aryle et un groupe alkylaryle ou un groupe alkyle en C₁-C₁₆.

10. Procédé de préparation de la composition de caoutchouc selon au moins une des revendications précédentes, dans lequel on obtient le caoutchouc fonctionnalisé de styrène-butadiène par copolymérisation du styrène et du 1,3-butadiène possédant un groupe d'amine primaire et/ou un groupe thiol et un groupe alcoxysilane lié à la chaîne polymère, le groupe d'amine primaire et/ou le groupe thiol étant de préférence introduits à l'extrémité déclenchant la polymérisation ou à l'extrémité terminant la polymérisation.

11. Procédé selon la revendication 10, dans lequel :
(i) le groupe alcoxysilyle comprend au moins un groupe méthoxysilyle et un groupe éthoxysilyle ; et/ou
(ii) la teneur en groupe alcoxysilyle lié à la chaîne polymère du caoutchouc de styrène/butadiène s'élève de 0,5 à 200 mg/kg du caoutchouc de styrène/butadiène ; et/ou
(iii) le groupe d'amine primaire et/ou le groupe thiol et/ou le groupe alcoxysilyle sont liés soit à l'extrémité déclenchant la polymérisation, soit à l'extrémité terminant la polymérisation, soit à la chaîne principale du caoutchouc de styrène butadiène, ou encore à titre de chaîne latérale du caoutchouc de styrène/butadiène pour autant que le groupe soit lié à la chaîne de caoutchouc de styrène/butadiène.

12. Procédé selon la revendication 10 ou 11, dans lequel :
(i) le composé possédant un groupe d'amine primaire et un groupe alcoxysilane comprend au moins un groupe choisi parmi le N,N-bis(triméthylsilyl)ominopropylméthyldiméthoxysilone, le 1-triméthylsilyl-2,2-diméthoxy-1-aza-2-silacyclopentane, le N,N-bis(triméthylsilyl)aminopropyltriméthoxysilane, le N,N-bis(triméthylsilyl)-aminopropyltriéthoxysilane, le N,N-bis(triméthylsilyl)aminopropylméthyldiéthoxysilane, le N,N-bis(triméthylsilyl)aminoéthyltriméthoxysilane, le N,N-bis(triméthylsilyl)-aminoéthyltriéthoxysilane, le N,N-bis(triméthylsilyl)aminoéthyl-méthyldiméthoxysilane, le N,N-bis(triméthylsilyl)aminoéthylméthyldiéthoxysilane, etc., et représente de préférence le 1-triméthylsilyl-2,2-diméthoxy-1-aza-2-silacyclopentane, le N,N-bis(triméthylsilyl)aminopropylméthyl-diméthoxysilane et le N,N-bis(triméthylsilyl)aminopropylméthyl-diéthoxysilane ; ou bien
(ii) le composé possédant un groupe d'amine primaire et un groupe alcoxysilane comprend un composé répondant à la formule III ci-après
**RN-(CH₂)ₓSi(OR)₃** **III**
dans laquelle R en combinaison avec l'atome d'azote (N) représente un groupe d'amine protégé qui, après un traitement ultérieur approprié, donne une amine primaire, R' représente un groupe contenant de 1 à 18 atomes de carbone, choisi parmi un groupe alkyle, un groupe cycloalkyle, un groupe allyle ou un groupe aryle ; et x représente un entier de 1 à 20.

13. Procédé selon au moins une des revendications précédentes 10 à 12, dans lequel
(i) on produit le caoutchouc de styrène/butadiène par : polymérisation du styrène et du butadiène dans un solvant d'hydrocarbure par polymérisation anionique en utilisant un métal alcalin organique et/ou un métal alcalino-terreux organique à titre d'initiateur; l'addition d'un composé faisant office d'agent de terminaison possédant un groupe d'amine primaire protégé avec un groupe de protection et/ou un groupe thiol protégé avec un groupe de protection, et un groupe alcoxysilane, pour le faire réagir avec une extrémité de chaîne polymère vivante au moment où la polymérisation est arrivée essentiellement à son terme ; et en procédant à un déblocage du groupe de protection ; et/ou
(ii) on prépare l'élastomère de polybutadiène par polymérisation d'un monomère de 1,3-polybutadiène dans une solution d'un solvant organique en présence d'un catalyseur comprenant un composé de néodyme, un composé d'alkylaluminium et un composé qui délivre du chlorure d'aluminium, pour autant qu'il possède la microstructure, le poids moléculaire et l'indice d'hétérogénéité et les plages de valeurs Tg, que l'on a mentionnés ci-dessus, les composés de néodyme comprenant au moins un membre choisi parmi le néodécanoate de néodyme et l'octanoate de néodyme ; le composé d'alkylaluminium comprenant au moins un membre choisi parmi le triisobutylaluminium (TIBA) et l'hydrure de diisobutylaluminium (DIBAH), et le composé délivrant du chlorure d'aluminium comprend le chlorure de diéthylaluminium.

14. Bandage pneumatique possédant un composant comprenant la composition de caoutchouc selon au moins une des revendications 1 à 9.

15. Bandage pneumatique selon la revendication 14, dans lequel le composant est une bande de roulement de bandage pneumatique.
